# EUROPÄISCHE PATENTSCHRIFT

(11) **EP 0 599 301 B1**
(45) Veröffentlichungstag und Bekanntmachung des Hinweises auf die Patenterteilung: **12.03.1997**
(21) Anmeldenummer: 93118942.7
(22) Anmeldetag: 24.11.1993
(51) Int. Cl.: B65D 47/34, B65D 83/00, B05B 11/00, G01F 11/08

(54) **Vorrichtung zum dosierten Austrag eines fliessfähigen Mediums aus einem Behälter**
Device for metered dispensing of flowable product from a container
Dispositif pour la distribution dosée d'un produit fluide contenu dans un récipient

(30) Priorität: 24.11.1992 DE 4239468; 11.03.1993 DE 4307752
(43) Veröffentlichungstag der Anmeldung: 01.06.1994
(73) Patentinhaber: COSTER TECNOLOGIE SPECIALI S.P.A., I-38050 Calceranica al Lago (Trento) (IT)
(72) Erfinder: Geier, Adalberto, Coster Tecnologie Speciali S.p.A, I-38050 Calceranica al Lago (TN) (IT)
(74) Vertreter: Popp, Eugen, Dr.

(56) Entgegenhaltungen:
- EP-A- 0 068 653
- EP-A- 0 282 595
- EP-A- 0 410 857
- EP-A- 0 410 858

## Beschreibung

Die Erfindung betrifft eine Vorrichtung zum dosierten Austrag eines fließfähigen Mediums, insbesondere einer pastösen oder hochviskosen Masse wie Creme, Gel oder dergleichen, aus einem Behälter gemäß Oberbegriff des Anspruches 1 (EP-A-0 410 858).

Derartige Vorrichtungen sind allgemein bekannt. Diese Vorrichtungen weisen jeweils einen Behälter mit einer Behälteröffnung auf, an der eine manuell betätigbare Dosierpumpe anschließbar ist. Dabei umfaßt die Dosierpumpe einen am Rand der Behälteröffnung befestigbaren Pumpenkörper mit einer von außen her volumenveränderbaren Pumpenkammer. Die Pumpenkammer kommuniziert eingangsseitig über ein in Richtung der Pumpenkammer hin öffenbares Rückschlagventil mit dem Inneren des Behälters und ausgangsseitig über eine Austragsöffnung mit der Umgebung.

Als nachteilig bei diesen Vorrichtungen hat sich das Fehlen von besonderen Vorkehrungen erwiesen, durch welche ein Kontakt des fließfähigen Mediums, wie Creme, Gel oder dergleichen, mit der Umgebung verhindert wird. Die Haltbarkeit des fließfähigen Mediums ist daher stark herabgesetzt. Darüber hinaus ist bei diesen Vorrichtungen von Nachteil, daß sie nicht vollständig entleert werden können. Meist verbleibt ein nicht unerheblicher Rest des fließfähigen Mediums im Behälter. Schließlich weisen die bekannten Vorrichtungen noch den Nachteil einer konstruktiv aufwendigen Ausgestaltung auf, wodurch die Herstellungs- und Montagekosten relativ hoch werden.

Aus der EP-A-0 410 858 ist eine Vorrichtung zum dosierten Austrag eines fießfähigen Mediums bekannt, die einen festen Behälter mit einer Behälteröffnung aufweist, wobei im Innern des Behälters ein flexibler Beutel als Reservoir des fließfähigen Mediums vorgesehen ist. Ferner weist die Vorrichtung einen etwa zylinderförmigen Austragskopf auf, der von einem auf dem Behälter angeordneten Verschlußelement, eine darauf angeordnete Dichtungsplatte aus elastischem Material und einem Kappenelement gebildet ist, das wiederum auf der Dichtungsplatte angeordnet ist. Der Austragskopf weist seitlich eine Verlängerung auf, welche die Austragsöffnung bildet. Zur Austragsöffnung hin ist in der elastischen Platte ein Austragskanal gebildet. Um die Austragsöffnung luftdicht zu verschließen, ist am äußeren Ende der Austragsöffnung eine Schließvorrichtung vorgesehen, bei der das als Dichtlippe ausgebildete Ende der Dichtungsplatte gegen das als Sitz ausgebildete äußere Ende des Kappenelements vorgespannt ist. Alternativ kann auch das äußere Ende des Verschlußelements als Sitz ausgebildet sein, gegen den die Dichtlippe der Dichtungsplatte vorgespannt ist. Sowohl die Dichtlippe als auch der Sitz des Kappenelements bzw. des Verschlußelements verlaufen schräg nach außen aufeinander zu. Bei Betätigung der Dosierpumpe gelangt das fließfähige Medium von der Pumpenkammer in den Austragskanal und drückt derart gegen die Dichtlippe, daß sich diese nach außen hin öffnet und das fließfähige Medium austreten kann. Läßt der Druck nach, schließt die Dichtlippe den Austragskanal luftdicht ab, in dem sie wieder mit dem Sitz in Anlage gelangt.

Als Nachteil erweist sich hier die umständliche Handhabung dieser Vorrichtung, denn durch den seitlichen Austrag des Fluides und durch die schräg nach vorne zulaufende Konstruktion der Dichtlippe und des Sitzes wird das Herabfallen des fließfähigen Mediums auf den Boden bzw. das Herabgleiten des Mediums an dem Behälter begünstigt, so daß der Benutzer die Vorrichtung stets beidhändig betätigen muß. Auch erschwert die Konstruktion der Dichtlippe und des Sitzes die Entnahme des fließfähigen Mediums, da zur vollständigen Entnahme des Mediums ein mehrmaliges Abstreifen um die Austragsöffnung herum erforderlich ist.

In der EP-A- 0 410 857 ist eine Vorrichtung zum dosierten Austrag eines fließfähigen Mediums beschrieben, die einen festen Behälter mit einer Behälteröffnung und einen flexiblen Beutel aufweist, der im Innern des Behälters im Bereich der Behälteröffnung angeordnet ist und als Reservoir des fließfähigen oder pulverförmigen Mediums dient. Der Austragskopf dieser Vorrichtung kann ähnlich wie in dem oben genannten Dokument, EP-A-0 410 858, beschrieben ausgebildet sein, so daß die obengenannten Nachteile hier gleichermaßen zutreffen.

Der Austragskopf kann ferner zum Austrag in Axialrichtung eine radiale Kappe mit über einen Umfang verteilten Austragsschlitzen aufweisen.

Weiterhin ist aus der EP-A-0 282 595 eine Vorrichtung zum dosierten Austrag eines fließfähigen Mediums bekannt, die eine zylinderförmige Einheit umfaßt, die mittig über eine Öffnung mit einem flexiblen Behälter oder einem flexiblen Beutel in einem festen Behälter kommuniziert. Der Behälter ist an dem äußeren gestuften Umfangsrand der zylinderförmigen Einheit befestigt, die zwei zylindrische Kolben umfaßt, die sich gleitend umschließen und mittels einer Feder gegeneinander vorgespannt sind. Der Austrag des Mediums erfolgt direkt über die von den Kolben gebildete Pumpenkammer in Axialrichtung durch eine mittig angeordnete Öffnung in der Betätigungstaste.

Auch diese Konstruktion hat eine umständliche Handhabung der Dosierpumpe zur Folge, da diese Konstruktion nur den Austrag in Durchgangsrichtung der beiden Kolben gestattet und dieser somit im Zentrum der Vorrichtung festgelegt ist. Indem der Austrag über die Betätigungstaste selbst erfolgt, wird einerseits die Entnahme des fließfähigen Mediums erschwert und andererseits die Betätigungstaste zunehmend beschmutzt.

Der vorliegenden Erfindung liegt daher die Aufgabe zugrunde, eine Vorrichtung zum dosierten Austrag eines fließfähigen Mediums dahingehend weiterzubilden, daß sie benutzerfreundlicher aufgebaut und gleichzeitig konstruktiv besonders einfach ausgestaltet sowie kostengünstig montierbar ist. Insbesondere soll eine einfache und bequeme Entnahme des fließfähigen Mediums ermöglicht werden.

Diese Aufgabe wird durch die kennzeichnenden Merkmale des Anspruchs 1 gelöst.

Gemäß der vorliegenden Erfindung umfaßt ein der Behälteröffnung zugeordnetes Verschlußelement einen zylinderförmigen Vorsprung, der sich nach außen durch das Kappenelement hindurch erstreckt, und eine sich ebenfalls durch ein Kappenelement nach außen hin durcherstreckende zylinderförmige Hülse. Die zylinderförmige Hülse umgibt den zylinderförmigen Vorsprung und bildet mit diesem die Austragsöfffnung. Durch diese konstruktive Maßnahme wird an der Austragsöffnung eine Fläche, die dem Durchmesser der Hülse entspricht, bereitgestellt, auf der sich das fließfähige Medium während des Austrags ansammeln und durch einfaches Abstreifen entnommen werden kann. Da der zylinderförmige Vorsprung die Austragsöffnung zugleich begrenzt, wird das Zurückfließen des Mediums in die Pumpenkammer verhindert.

Von großer Bedeutung für eine ausgesprochen einfache Bauweise, welche damit einhergehend allenfalls geringe Montagekosten nach sich zieht, sind die baulichen Maßnahmen nach den Ansprüchen 2 bis 16. Besonders vorteilhaft in diesem Zusammenhang sind die Merkmale der Ansprüche 2 bis 5, die zum einen eine zuverlässige Abdichtung des noch in der Dosierpumpe und dem flexiblen Beutel verbliebenen, fließfähigen Mediums gegenüber der Umgebung und zum anderen einen ringförmigen Austrag des fließfähigen Mediums ermöglicht, so daß sich das Medium gleichmäßig im Bereich der Austragsöffnung sammelt und von dort bequem entnommen werden kann.

Von großem Vorteil ist gemäß den Ansprüchen 6 bis 15 ferner die Anordnung einer flexiblen Membran zwischen dem Verschlußelement und dem Pumpenkörper. Die Membran ist durch den Pumpenkörper, der aus einem Kappenelement mit einer Betätigungstaste gebildet wird, relativ zum Verschlußelement bewegbar und liegt in Austragsstellung fast vollständig an das Verschlußelement an. Dies hat zur Folge, daß nahezu 100 % des fließfähigen Mediums aus der Pumpenkammer verdrängt wird, so daß bei der erfindungsgemäßen Vorrichtung kein Restmaterial in der Pumpenkammer zurück bleibt. Hierdurch wird die Haltbarkeit des fließfähigen Mediums beträchtlich verlängert.

Weiterhin liegt es im Rahmen der Erfindung gemäß Anspruch 17, die Betätigungstaste der Dosierpumpe neben der Anlenkung der Betätigungstaste an dem Kappenelement der Dosierpumpe zusätzlich über einen der Anlenkung etwa diametral gegenüberliegenden Sollbruchsteg oder dergleichen zu verbinden. Durch erstmaliges Herunterdrücken der Betätigungstaste wird diese sodann von dem Kappenelement der Dosierpumpe getrennt. Der Sollbruchsteg dient insofern der Garantie einer bisherigen Nichtbenutzung der erfindungsgemäßen Vorrichtung.

Besonders vorteilhaft ist ferner die Anordnung sowie die Ausgestaltung des flexiblen Beutels in dem Behälter gemäß den Ansprüchen 18 bis 27.

Vor dem Befüllen des flexiblen Beutels mit Creme oder dgl. wird der Beutel an die innere Oberfläche des äußeren Behälters dicht angelegt. Um ein Insichzusammenfallen des flexiblen Beutels mit zunehmender Entleerung des fließfähigen Mediums aus diesem infolge eines innerhalb des flexiblen Beutels aufgebauten Unterdrucks sicherzustellen bzw. zusätzlich zu unterstützen, steht zumindest der Boden des flexiblen Beutels mit der Umgebung in Kontakt. Der äußere Luftdruck unterstützt daher die Kontraktion des flexiblen Beutels bei Betätigung der Pumpe zum Austrag des Beutelinhalts.

Weiterhin liegt es im Rahme der Erfindung entsprechend Anspruch 24, daß nämlich der flexible Beutel wasser- und/oder gasundurchlässig ausgestaltet ist, um die Haltbarkeit des in dem flexiblen Beutel enthaltenen fließfähigen Mediums bis zur nahezu vollständigen Entleerung zu garantieren.

Insbesondere ist der flexible Beutel gemäß den Maßnahmen nach den Ansprüchen 25 und 26 aus Kunststoff oder dergleichen Material und/oder aus wenigstens einer folienartigen Schicht gebildet. Als besonders vorteilhaft hat es sich in diesem Zusammenhang erwiesen, den flexiblen Beutel gemäß Anspruch 27 aus drei folienartigen Schichten zusammenzusetzen, wobei vorzugsweise die Innenschicht aus einer PET (Polyethylenterephtalat)-Verbindung, die Zwischenschicht aus EVOH (Ethylvnylalkohol) und die Außenschicht aus Polyethylen oder dgl. besteht. Durch einen solchen schichtartigen Aufbau des flexiblen Beutels ist einerseits ein Wasser- und Gas-, insbesondere 0₂ -Durchtritt durch den flexiblen Beutel sicher vermieden und andererseits eine Schweißverbindung des flexiblen Beutels mit dem den flexiblen Beutel aufnehmenden Behälter im Bereich der Behälteröffnung des Behälters ermöglicht.

Weitere Vorteile und Einzelheiten der Erfindung ergeben sich aus der nachfolgenden Beschreibung einiger bevorzugter Ausführungsformen der Erfindung sowie anhand der Zeichnung. Hierbei zeigen:
- Fig. 1: einen mittleren Längsschnitt durch eine Ausführungsform in einer erfindungsgemäß ausgebildeten Vorrichtung zum dosierten Austrag eines fließfähigen Mediums vor Ingebrauchnahme;
- Fig. 2: eine teilweise abgebrochene Draufsicht auf die Ausführungsform der erfindungsgemäßen Vorrichtung gemäß Fig. 1;
- Fig. 3: einen mittleren Längsschnitt durch die Ausführungsform der erfindungsgemäßen Vorrichtung entsprechend Fig. 1 in Offenstellung nach Ingebrauchnahme;
- Fig. 4: einen mittleren Längsschnitt durch einen Teil der Ausführungsform der erfindungsgemäßen Vorrichtung gemäß Ausschnitt IV in Fig. 3 in vergrößertem Maßstab;
- Fig. 5: einen mittleren Längsschnitt durch die Ausführungsform der erfindungsgemäß ausgebildeten Vorrichtung entsprechend Fig. 1 in Schließstellung nach Ingebrauchnahme;
- Fig. 6: einen mittleren Längsschnitt durch einen Teil der Ausführungsform der erfindungsgemäßen Vorrichtung gemäß Ausschnitt VI in Fig. 5 in vergrößertem Maßstab; und
- Fig. 7: einen mittleren Längsschnitt durch eine andere Ausführungsform einer erfindungsgemäß ausgebildeten Vorrichtung vor Ingebrauchnahme.

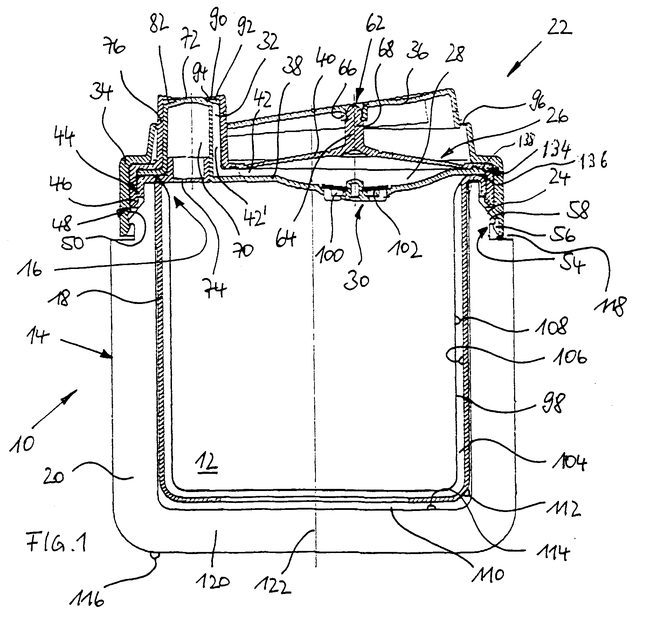

Die in Fig. 1 dargestellte Vorrichtung 10 dient der Aufbewahrung und dem dosierten Austrag eines fließfähigen Mediums 12, insbesondere einer pastösen bzw. hochviskosen Masse wie kosmetischen bzw. pharmazeutischen Cremes, Gels oder dgl., die nicht mit der Umgebung bzw. Luft in Kontakt kommen sollen.

Die Vorrichtung 10 weist einen Behälter 14 mit einer Behälteröffnung 16 auf, wobei der Behälter 14 gemäß Fig. 1 aus einer Innenschale 18 und einer Außenschale 20 zusammengesetzt ist. Innenschale 18 und/oder Außenschale 20 bestehen aus Glas, Kunstglas, Kunststoff oder ähnlichem Material.

An der Behälteröffnung 16 ist eine manuell betätigbare Dosierpumpe 22 anschließbar, die einen am Rand 24 der Behälteröffnung 16 befestigbaren Pumpenkörper 26 aufweist. Der Pumpenkörper 26 umfaßt eine von außen her volumenveränderbare Pumpenkammer 28. Die Pumpenkammer 28 kommuniziert eingangsseitig über ein in Richtung der Pumpenkammer 28 hin öffenbares Rückschlagventil 30 mit dem Inneren des Behälters 14 und ausgangsseitig über eine Austragsöffnung 32 mit der Umgebung.

Die Dosierpumpe 22 ist von einem Kappenelement 34 mit einer integral angelenkten Betätigungstaste 36, einem der Behälteröffnung 16 zugeordneten, mit dem Rückschlagventil 30 versehenen deckelartigen Verschlußelement 38 und einer zwischen dem Kappenelement 34 und dem Verschlußelement 38 angeordneten flexiblen Membran 40 gebildet. Die flexible Membran 40 ist mit der Betätigungstaste 36 verbunden, um entsprechend hin zu bzw. weg von dem Verschlußelement 38 bewegt werden zu können. Insofern dient die Dosierpumpe 22 der erfindungsgemäßen Vorrichtung 10 zugleich als ein die Behälteröffnung 16 verschließender Deckel für den Behälter 14.

Wie aus Fig. 1 deutlich hervorgeht, nimmt das Kappenelement 34 die flexible Membran 40 und das Verschlußelement 38 halternd auf, welche zwischen sich die Pumpenkammer 28 und einen die Pumpenkammer 28 mit der Austragsöffnung 32 verbindenen Austragskanal 42 begrenzen. Der Austragskanal 42 selbst weist einen nur kleinen Durchmesser auf, um die darin enthaltene Luftmenge vor erster Ingebrauchnahme bzw. nach erster Betätigung der erfindungsgemäßen Vorrichtung 10 möglichst klein zu halten.

Das deckelartige Verschlußelement 38 ist an der flexiblen Membran 40 bzw. an dem die Membran 40 umfassenden Teil längs seines Umfangrandes durch eine Rast-, Schnapp- oder dgl. -einrichtung 134 fixiert. Die Rast-, Schnapp- oder dgl. -einrichtung 134 ist hier durch einen sich radial nach innen hin erstreckenden Ringwulst 136 gebildet, der mit dem Umfangsrand des deckelartigen Verschlußelements 38 in rastendem Funktionseingriff steht.

Die flexible Membran 40 wiederum ist am Kappenelement 34 ebenfalls längs ihres Umfangrandes durch eine Rast-, Schnapp- oder dgl. -einrichtung 48 fixierbar. Die Rast-, Schnapp- oder dgl. -einrichtung 48 umfaßt ebenso einen radial nach innen vorspringenden Ringwulst 50, durch den die flexible Membran 40 an dem Kappenelement 34 rast-, schnapp- oder dergleichen -artig festgelegt ist.

Die gesamte Dosierpumpe 22 ist bei dem dargestellten Ausführungsbeispiel an dem Behälter 14, insbesondere im Bereich der Behälteröffnung 16 durch eine Rast-, Schnapp- oder dergleichen -einrichtung 54 fixiert. Zu diesem Zweck ist das Kappenelement 34 mit einer sich radial nach innen hin erstreckenden Rast-, Schnapp- oder dergleichen -nase 56 versehen. Die Rast-, Schnapp- oder dergleichen -nase 56 ist rast-, schnapp- oder dergleichen -artig mit einem sich radial nach außen hin erstreckenden Ringwulst 58 am Behälter 14 in Funktionseingriff gebracht. Alternativ kann die Dosierpumpe 22 durch Aufschrauben des Kappenelements 34 auf ein Außengewinde am Behälteröffnungsrand, d. h. am oberen Rand der Außenschale 20 des Behälters 14 befestigt werden.

Bei dem dargestellten Ausführungsbeispiel ist noch eine weitere Rastverbindung vorgesehen, und zwar zwischen der Innenschale 18 bzw. deren Öffnungsrand 44 und dem Umfangsrand des die Membran 40 umfassenden Teils. Zu diesem Zweck ist am vorgenannten Umfangsrand ein radial nach innen vorspringender Ringwulst 46 ausgebildet. Damit stellt die Innenschale 18 samt flexiblem Beutel 98 und Dosierpumpe 22 eine Montageeinheit dar, die an der Außenschale 20 des Behälters mittels der Rastverbindung 54 fixierbar ist. Statt der Rastverbindung 54 kann - wie oben bereits dargelegt - auch eine Schraubverbindung vorgesehen sein. Der Abfüller erhält vom Hersteller der Vorrichtung die jeweils zusammengesetzten Teile 34, 38, 40 einerseits und die Innenschale 18 samt Beutel 98 andererseits. Die Außenschale 20 ist vom Abfüller hinsichtlich der äußeren Gestaltung variabel und steht in der Regel beim Abfüller zur Verfügung. Die Außenschale 20 muß natürlich zum Anschluß der Dosierpumpe und zum Einsatz der Innenschale angepaßt sein.

Die flexible Membran 40 steht mit der Betätigungstaste 36 in Verbindung, die am Kappenelement 34 im Bereich 60 integral angelenkt ist. Insbesondere ist die flexible Membran 40 über eine Rast-, Schnapp- oder dergleichen -einrichtung 62 mit dem Kappenelement 34 verbunden.

Gemäß der in Fig. 1 gezeigten Ausführungsform ist zur Verbindung von Betätigungstaste 36 und flexibler Membran 40 als Rast-, Schnapp- oder dergleichen -einrichtung 62 ein Zapfen 64, welcher sich etwa senkrecht von der Oberseite der flexiblen Membran 40 wegerstreckt, und eine Rast-, Schnapp- oder dergleichen -aufnahme 66, welche an der Unterseite der Betätigungstaste 36 angeordnet ist, vorgesehen. Insoweit kann das freie obere Ende 68 des Zapfens 64 in die Rast-, Schnapp- oder dergleichen -aufnahme 66 zur Festlegung der flexiblen Membran 40 an der Betätigungstaste 36 eingreifen.

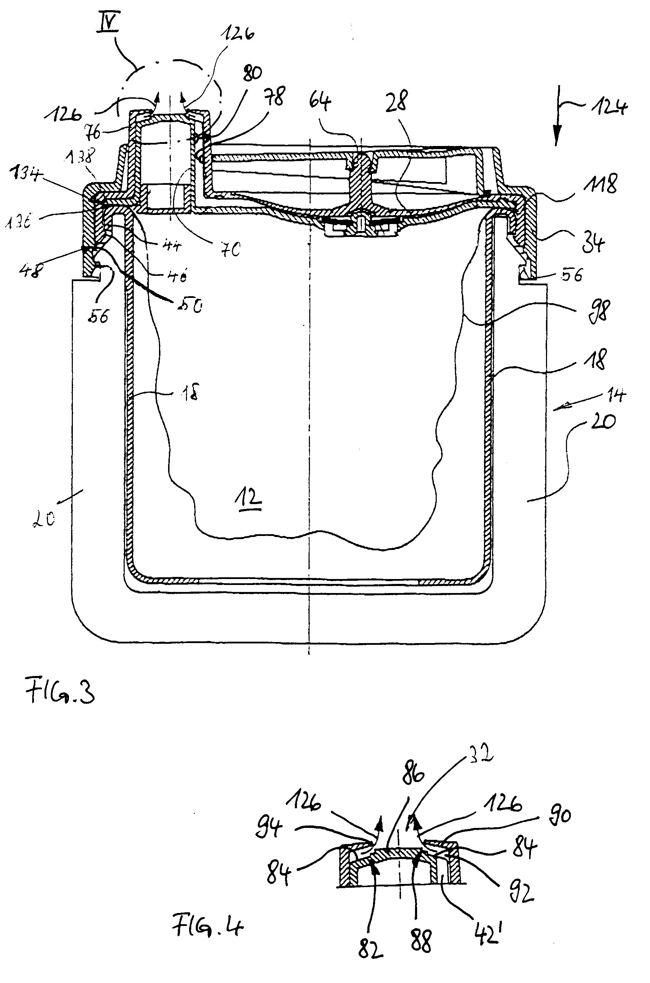

Auf diese Weise ist erreicht, daß das Volumen der Pumpenkammer 28 an die Bewegung der Betätigungstaste 36 angekoppelt ist. Dementsprechend nimmt das Volumen der Pumpenkammer 28 in der Schließstellung der Dosierpumpe 22, d. h. bei ausgefahrener Betätigungstaste 36 entsprechend Fig. 1, den Wert 1 an, während sich das Volumen der Pumpenkammer 28 in der Austragsstellung der Dosierpumpe 22, d. h. bei heruntergedrückter Betätigungstaste 36 entsprechend Fig. 3, dem Wert 0 nähert.

Um eine solche Relativbewegung zwischen der flexiblen Membran 40 und dem deckelartigen Verschlußelement 38 zur Volumenänderung der von diesen gebildeten Pumpenkammer 28 zu ermöglichen, besteht die flexible Membran 40 aus einem elastisch verformbaren Kunststoff, insbesondere Gummi oder dergleichen, das Verschlußelement 38 hingegen aus einem weitgehend starren Kunststoff oder dgl. Material. Zudem kann die flexible Membran 40 im Bereich der Pumpenkammer 28 und/oder die Betätigungstaste 36 in ihrem Anlenkbereich 60 in Richtung Schließstellung der Dosierpumpe 22 federelastisch vorgespannt sein. Hierdurch wird die Bewegung der flexiblen Membran 40 aus der Austragsstellung in die Schließstellung und damit zusammenhängend die Bewegung der Betätigungstaste 36 aus heruntergedrückter Stellung in die ausgefahrene Stellung erleichtert.

Nach Fig. 1 weist das Verschlußelement 38 einen zylindrischen Vorsprung 70 auf, der sich durch das Kappenelement 34 nach außen hindurcherstreckt. Der zylinderförmige Vorsprung 70 des Verschlußelementes 38 ist nach außen hin verschlossen. Im dargestellten Fall ist der Vorsprung 70 an seinen beiden Stirnseiten verschlossen, nämlich zum einen durch eine integrale Stirnwand 72 und zum anderen durch einen innenseitig angeordneten Verschlußpfropfen 74. Durch den Verschlußpfropfen 74 ist ein Einschluß von Luft, die auf das in den Behälter 14 eingefüllte fließfähige Medium 12 schädlich einwirken könnte, vermieden. Anstatt durch den Verschlußpfropfen 74 könnte der Vorsprung 70 auch durch eine innere Stirnwand als integraler Teil des Verschlußelements 38 verschlossen sein.

Gemäß Fig. 1 ist der Vorsprung 70 von einer äußeren Hülse 76 umgeben, die integral an der flexiblen Membran 40 bzw. an dem die Membran 40 umfassenden Bauteil ausgebildet ist. Die Hülse 76 erstreckt sich ebenfalls durch das Kappenelement 34 hindurch. An dem freien Ende der Hülse 76 ist die Austragsöffnung 32 vorgesehen.

Zur Fortsetzung des Austragskanals 42 zur Austragsöffnung 32 weist der zylinderförmige Vorsprung 70 am Außenumfang einen Längskanal in Form einer Längsnut 42' auf. Allerdings ist es ebensogut denkbar, den Längskanal an der Innenseite der den Vorsprung 70 umgebenden Hülse 76 auszubilden. Im übrigen entspricht der Innendurchmesser 78 der Hülse 76 etwa dem Außendurchmesser 80 des Vorsprungs 70 (Spielpassung).

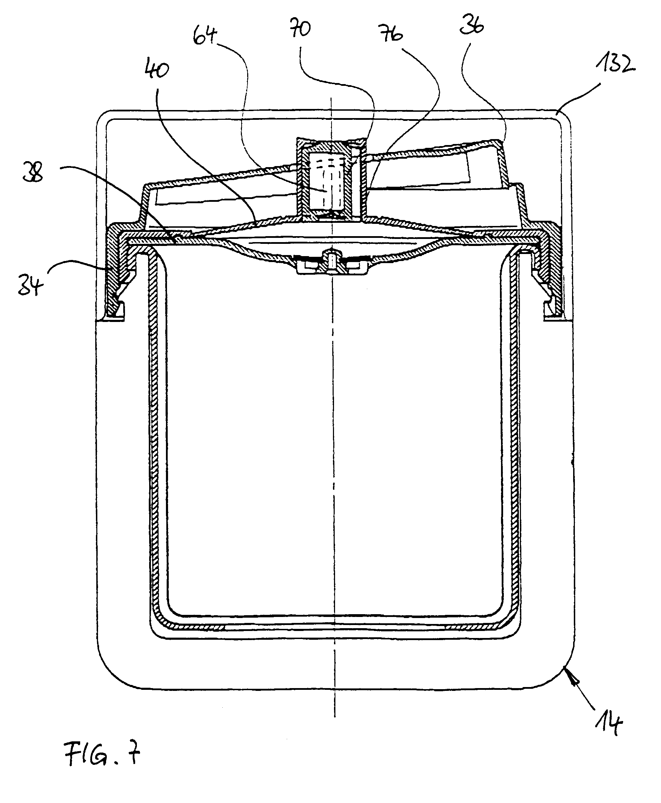

Der zylinderförmige Vorsprung 70 des Verschlußelementes 38 ist am freien oberen Ende mit einer stirnseitig und kreisringförmig vorgesehenen Abschrägung 82 versehen. Insofern weist die Stirnwand 72 an ihrem Außenumfang eine konische Ringfläche 84 (vgl. insbesondere Fig. 4 und 6) auf. Bei dem dargestellten Ausführungsbeispiel ist die konische Ringfläche 84 von einer kreisförmigen Zentralfläche 86 durch einen Ringabsatz 88 getrennt.

Zusammen mit einem ringförmigen Schließlappen, welcher an dem freien Rand der zylinderförmigen Hülse 76 ausgebildet ist und die Austragsöffnung 32 der Dosierpumpe 22 begrenzt, bildet die Ringfläche 82 einen Austragsringkanal 92. Dieser ist über den Längskanal 42' mit dem Austragskanal 42 und damit mit der Pumpenkammer 28 fluidverbunden.

Um ein vollständiges bzw. restfreies Abstreifen des aus dem Behälter 14 geförderten Mediums 12 von der Austragsöffnung 32 zu ermöglichen, ergänzen sich die stirnseitige Zentralfläche 86 des Vorsprunges 70 und der kreisringförmige Schließlappen 90 derart, daß ihre Oberflächen in Schließstellung etwa in einer Ebene liegen. Zu diesem Zweck liegt der innere Rand 94 des Schließlappens 90 auf dem Ringabsatz 88, wie Fig. 6 zeigt, zur sicheren Abdichtung auf. Dabei ist es vorteilhaft, den Schließlappen 90 zur zusätzlichen Verbesserung der Dichtwirkung in Schließrichtung vorzuspannen.

Das restfreie Abstreifen des Mediums von der Austragsöffnung wird zusätzlich dadurch gefördert, daß die durch die Zentralfläche 86 und den Schließlappen 90 in Schließstellung definierte Ebene geringfügig konkav gewölbt ist. Dann läßt sich das Medium noch leichter mit einem Finger abstreifen.

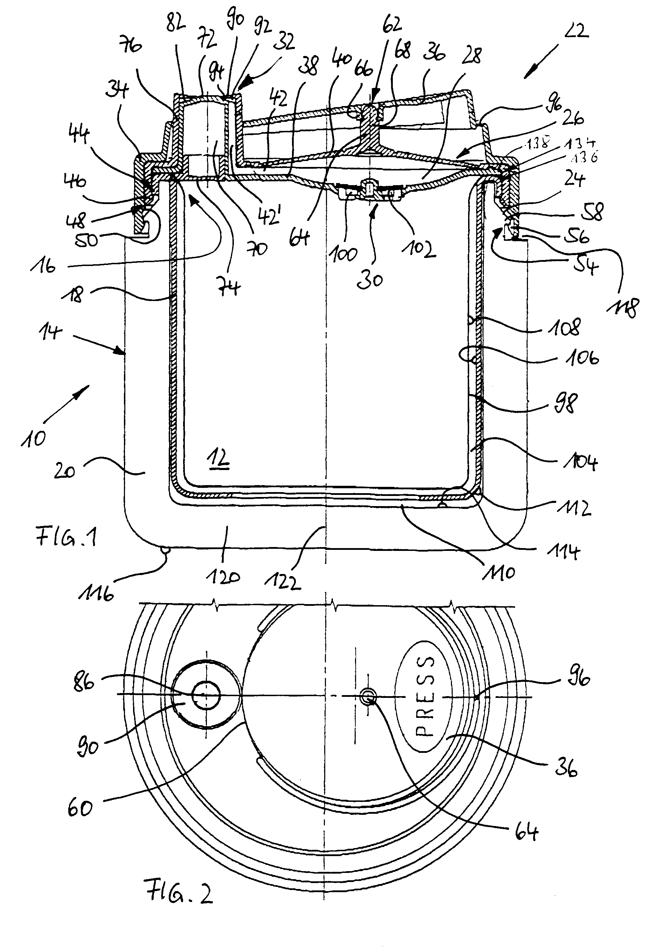

Gemäß Fig. 1 und 2 ist die Betätigungstaste 36, die im Bereich 60 an dem Kappenelement 34 angelenkt ist, zusätzlich mit dem Kappenelement 34 über einen der Anlenkung bzw. dem Bereich 60 etwa diametral gegenüberliegenden Sollbruchsteg 96 verbunden. Der Sollbruchsteg 96 reißt bei erstmaligem Herunterdrücken der Betätigungstaste 36 von dem Kappenelement 34 und/oder der Betätigungstaste 36 ab. Der Sollbruchsteg 96 dient insoweit der Kenntlichmachung einer benutzten bzw. unbenutzten Vorrichtung 10.

Weiterhin ist der Behälter 14 im Inneren mit einem flexiblen Beutel 98 zur Aufnahme des fließfähigen Mediums 12 versehen, der im Bereich der Behälteröffnung 16 bzw. nahe dem Rand 24 der Behälteröffnung 16 des Behälters 14 mit dem Behälter 14 verbunden, insbesondere verschweißt, angeschweißt oder dergleichen ist. Auf diese Weise ist sichergestellt, daß einerseits nach dem Befüllen das fließfähige Medium 12 nicht mit der Umgebung in Kontakt kommen kann und andererseits aber vollständig, zumindest aber nahezu vollständig aus dem Behälter 14 bzw. aus dem infolge eines sich aufbauenden Unterdruckes in sich zusammenfallenden flexiblen Beutel 98 entleert werden kann. Das Rückschlagventil 30, das durch im Verschlußelement 38 angeordnete Öffnungen 100 und einen diesen Öffnungen zugeordneten etwa ringförmigen Schließlappen 102 gebildet ist, steht daher ständig mit dem fließfähigen Medium 12 in Kontakt bzw. ist in dieses eingetaucht. Durch den bei Betätigung der Pumpe 22 sich innerhalb des flexiblen Beutels 98 aufbauenden Unterdruck zieht sich der flexible Beutel 98 zusammen, so daß das Rückschlagventil 30 in dem fließfähigen Medium 12 bis zu dessen vollständiger Entleerung in diesem eingetaucht bleibt.

Um das Insicheinfallen des flexiblen Beutels 98 zu unterstützen, kommuniziert die äußere Oberfläche 108 oder zumindest ein Teil derselben mit der Umgebung. Beim dargestellten Ausführungsbeispiel kommuniziert ein Raum 104, welcher von der inneren Oberfläche 106 der Innenschale 18 von dem Behälter 14 und der äußeren Oberfläche 108 des flexiblen Beutels 98 begrenzt wird, mit der Umgebung. Insbesondere kommuniziert der von der inneren Oberfläche 106 des Behälters 14 und der äußeren Oberfläche 108 des flexiblen Beutels 98 begrenzte Raum 104 mit der Umgebung über einen sich durch die Wandung des Behälters 14 hindurcherstreckenden Lufteinlaßkanal 110. Der Lufteinlaßkanal 110 verläuft hier zwischen der äußeren Oberfläche 112 der Innenschale 18 und der inneren Oberfläche 114 der Außenschale 20 des Behälters 14 und mündet in eine an der Außenfläche 116 des Behälters 14 frei zugängliche Lufteinlaßöffnung 118 ein.

Um eine möglichst gleichmäßige Druckverteilung innerhalb des Raumes 104 zwischen der inneren Oberfläche 106 des Behälters 14 und der äußeren Oberfläche 108 des flexiblen Beutels 98 zu erhalten, erstreckt sich der Lufteinlaßkanal 110 durch die Wandung des Behälters 14 im Bereich des Bodens 120 desselben, und zwar insbesondere etwa mittig zur Längsachse 122 des Behälters 14 hindurch.

Um eine vollständige Ausnutzung des Beutelraumes zur Befüllung zu gewährleisten, hat es sich als vorteilhaft erwiesen, den flexiblen Beutel 98 innerhalb der Innenschale derart zu fixieren, daß die Beutelwand allseitig dicht an der inneren Oberfläche der Innenschale 18 anliegt. Vorzugsweise wird der Beutel 98 zu diesem Zweck wenigstens im Bodeneckbereich der Innenschale 18 fixiert, z. B. angeklebt. Die Fixierung bzw. Klebung ist jedoch derart leicht, daß beim Austrag von Medium das Insicheinfallen des Beutels 98 nicht behindert wird.

Der flexible Beutel 98 ist vorzugsweise wasser- und/oder gasundurchlässig, um so die Haltbarkeit des von dem flexiblen Beutel 98 aufgenommenen fließfähigen Mediums 12 zu erhöhen. Zu diesem Zweck ist der flexible Beutel 98 aus Kunststoff oder dergleichen Material und/oder wenigstens aus einer folienartigen Schicht, beispielsweise mit einer Dicke von 0,1 bis 0,02 mm, gebildet. Vorteilhafterweise ist der flexible Beutel 98 aus drei folienartigen Schichten (nicht gezeigt) zusammengesetzt. Dabei besteht die Innenschicht aus einer PET (Polyethylenterephtalat)-Verbindung, die Zwischenschicht aus EVOH (Ethylvinylalkohol) und die an dem Behälter 14 im Bereich der Behälteröffnung 16 bzw. am Rand 24 der Behälteröffnung 16 anzuschweißende Außenschicht aus Polyethylen oder dergleichen schweißfähigem Material. Beim Austrag des fließfähigen Mediums 12 durch die Dosierpumpe 22 aus dem flexiblen Beutel 98 ist ein Eintritt von Luft sicher vermieden, so daß der flexible Beutel 98 nach und nach bis zur vollkommenen Entleerung des fließfähigen Mediums 12 zusammenfällt.

Anhand der Fig. 3 bis 6 wird im folgenden kurz die Funktionsweise der Vorrichtung 10 zum dosierten Austrag des fließfähigen Mediums 12 erläutert:

Nach Ingebrauchnahme der Vorrichtung 10 wird das sich in der Pumpenkammer 28 befindliche fließfähige Medium 12 durch Ein- bzw. Herunterdrücken der Betätigungstaste 36 in die Austragsstellung der Dosierpumpe 22 gemäß Pfeil 124 in Fig. 3 über die flexible Membran 40 zu nahezu 100 % verdrängt. Das fließfähige Medium 12 gelangt auf diese Weise über den Austragskanal 42 und den Längskanal 42' in den Austragsringkanal 92. Durch den aufgebauten Druck wird der Rand des Schließlappens 90 an der Hülse 76 vom Ringabsatz 88 des Vorsprunges 70 abgehoben. Das fließfähige Medium gelangt somit nach außen gemäß den Pfeilen 126.

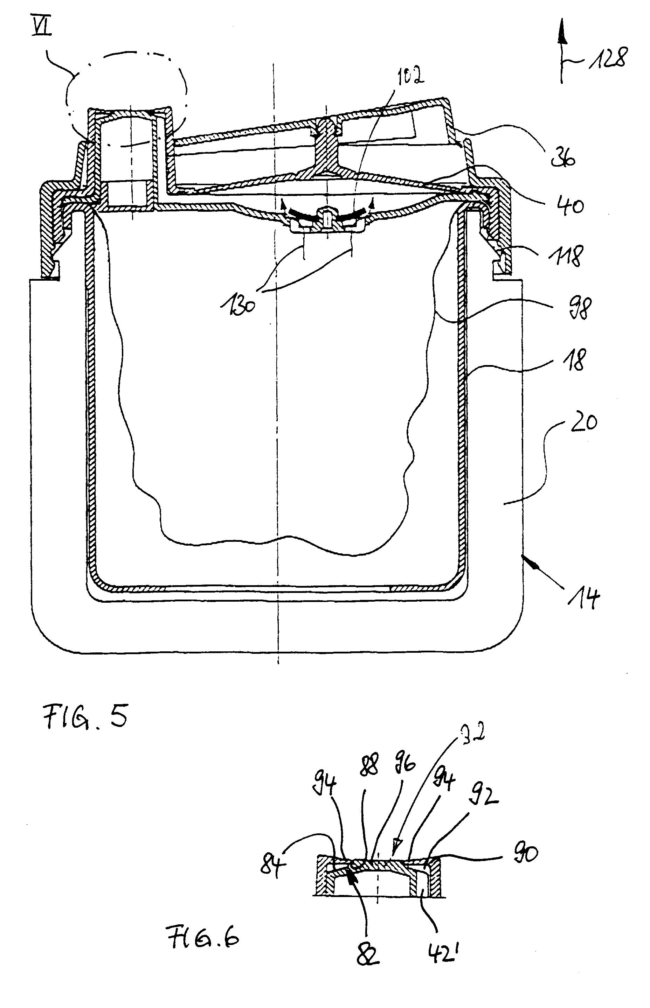

Gemäß Fig. 5 und 6 bewegt sich sodann die Betätigungstaste 36 und damit zusammenhängend die flexible Membran 40 in die Schließstellung zurück gemäß Pfeil 128. In der Pumpenkammer 28 entsteht ein Vakuum, das dazu führt, daß in dem flexiblen Beutel 98 enthaltenes fließfähiges Medium 12 durch die Öffnung 100 des Rückschlagventiles 30 bei abgehobenem Schließlappen 102 in die Pumpenkammer 28 entsprechend der Pfeile 130 angesaugt wird. Gleichzeitig zieht sich der flexible Beutel 98 um das in die Pumpenkammer 28 eingebrachte Volumen des fließfähigen Mediums 12 zusammen. Nachdem sich in der Zwischenzeit auch wieder der Schließlappen 90 der Hülse 76 auf dem Ringabsatz 88 des Vorsprunges 70 abgesetzt hat, kann das ausgetragene fließfähige Medium 12 bequem mit dem Finger oder der Hand von der durch den Schließlappen 90 und der Zentralfläche 86 des Vorsprungs 70 definierten Ebene abgestreift werden. Der Schließlappen 90 garantiert eine gute Abdichtung des Behälterinneren, insbesondere der Pumpenkammer 28 gegenüber der Umgebung. Das fließfähige Medium 12 ist daher besonders lange haltbar.

Die in Fig. 7 dargestellte weitere Ausführungsform einer erfindungsgemäßen Vorrichtung 10 zum dosierten Austrag von fließfähigem Medium 12 unterscheidet sich von derjenigen nach den Fig. 1 bis 6 lediglich durch die mittige Anordnung der Austragsöffnung 32 bzw. des Vorsprungs 70 und der zugeordneten Hülse 76. Gleiche Bauteile sind insofern mit gleichen Bezugsziffern versehen.

Die Vorrichtung 10 gemäß Fig. 7 ist noch mit einer die Dosierpumpe 22 abdeckenden Schutzkappe 132 versehen, wodurch ein ungewolltes Ein- bzw. Herunterdrücken der Betätigungstaste 36 und somit ein ungewollter Austrag von fließfähigem Medium 12 aus dem Behälter 14 bzw. dem flexiblen Beutel 98 sicher verhindert ist.

## Patentansprüche

1. Vorrichtung zum dosierten Austrag eines fließfähigen Mediums (12), insbesondere einer pastösen Masse wie Creme, Gel oder dergleichen, die folgendes aufweist:
- einen Behälter (14) mit einer Behälteröffnung (16),
- einen flexiblen Beutel (98), der im Innern des Behälters 14) im Bereich der Behälteröffnung (16) mit dem Behälter (14) verbunden und zur Aufnahme des fließfähigen Mediums (12) vorgesehen ist, und
- eine manuell betätigbare Dosierpumpe (22), die an der Behälteröffnung (16) anschließbar ist, wobei die Dosierpumpe (22) einen am Rand (24) der Behälteröffnung (16) befestigbaren Pumpenkörper (26) mit einer von außen her volumenveränderbaren Pumpenkammer (28) aufweist, welche eingangsseitig über ein in Richtung der Pumpenkammer (28) hin öffenbares Rückschlagventil (30) mit dem Inneren des Behälters (14) und ausgangsseitig über eine Austragsöffnung (32) mit der Umgebung kommuniziert,
**dadurch gekennzeichnet**,
daß die Dosierpumpe (22) ein Kappenelement (34) mit einer integral angelenkten Betätigungstaste (36) und ein der Behälteröffnung (16) zugeordnetes deckelartiges Verschlußelement (38) aufweist, welches das Rückschlagventil (30) umfaßt, wobei das Verschlußelement (38) einen sich nach außen durch das Kappenelement (34) hindurcherstreckenden, zylinderförmigen Vorsprung (70) aufweist, der von einer sich ebenfalls durch das Kappenelement (34) nach außen hindurch erstreckenden, zylinderförmigen Hülse (76) umgeben ist, an deren äußerem, freien Ende die Austragsöffnung (32) ausgebildet ist.

2. Vorrichtung nach Anspruch 1,
**dadurch gekennzeichnet**,
daß der zylinderförmige Vorsprung (70) des Verschlußelements (38) am äußeren Umfang einen Längskanal (42') umfaßt, der die Verbindung zwischen der Austragsöffnung (32) und einem in die Pumpenkammer (28) mündenden Austragskanal (42) herstellt, der die Pumpenkammer (28) mit der Austragsöffnung (32) verbindet.

3. Vorrichtung nach Anspruch 1 oder 2,
**dadurch gekennzeichnet**,
daß der zylinderförmige Vorsprung (70) des Verschlußelementes (38) an seinem äußeren stirnseitigen Ende eine kreisringförmige Abschrägung (82), Ausnehmung oder dergleichen aufweist, die zusammen mit einem an dem freien Ende der zylinderförmigen Hülse (76) ringförmig ausgebildeten, die Austragsöffnung (32) begrenzenden Schließlappen (90) einen ringförmigen Materialaustritt (92) definiert.

4. Vorrichtung nach Anspruch 3,
**dadurch gekennzeichnet**,
daß sich ein stirnseitiger, kreisförmiger Bereich (86) des Vorsprunges (70) des Verschlußelenents (38) und der ringförmige Schließlappen (90) ergänzen, derart, daß deren Außenflächen in Schließstellung etwa in einer Ebene liegen, wobei diese Ebene vorzugsweise geringfügig konkav gewölbt ist.

5. Vorrichtung nach Anspruch 3 und/oder 4,
**dadurch gekennzeichnet**,
daß der Schließlappen (90) in Schließrichtung vorgespannt ist.

6. Vorrichtung nach einem der Ansprüche 1 bis 5,
**dadurch gekennzeichnet**,
daß die Dosierpumpe (22) ferner eine flexible Membran (40) aufweist, die zwischen dem Kappenelement (34) und dem Verschlußelement (38) angeordnet und mittels der Betätigungstaste (36) relativ zum Verschlußelement (38) bewegbar ist, wobei die flexible Membran (40) und das Verschlußelement (38) zwischen sich die Pumpenkammer (28) des Pumpenkörpers und den Austragskanal (42) begrenzen.

7. Vorrichtung nach einem der Ansprüche 1 bis 6,
**dadurch gekennzeichnet**,
daß die zylinderförmige Hülse (76), welche den zylinderförmigen Vorsprung (70) umgibt, an der flexiblen Membran (40) ausgebildet ist.

8. Vorrichtung nach Anspruch 6,
**dadurch gekennzeichnet**,
daß die flexible Membran (40) und das Verschlußelement (38) am Kappenelement (34) unter Ausbildung einer gemeinsamen Montageeinheit fixierbar sind.

9. Vorrichtung nach einem der Ansprüche 6 bis 8,
**dadurch gekennzeichnet**,
daß das deckelartige Verschlußelement (38) längs seines Umfangsrandes mit der flexiblen Membran (40) lösbar verbindbar, insbesondere verrastbar ist.

10. Vorrichtung nach einem der Ansprüche 6 bis 9,
**dadurch gekennzeichnet**,
daß die flexible Membran (40) längs ihres Umfangsrandes am Kappenelement (34) durch eine Rast-, Schnapp- oder dergleichen -einrichtung (48) fixierbar ist.

11. Vorrichtung nach einem der Ansprüche 1 bis 10,
**dadurch gekennzeichnet**,
daß die Dosierpumpe (22) an dem Behälter (14), insbesondere im Bereich der Behälteröffnung (16), durch eine Rast-, Schnapp- oder dergleichen -einrichtung (54) fixierbar oder alternativ auf den Rand der Behälteröffnung (16) aufschraubbar ist.

12. Vorrichtung nach Anspruch 11,
**dadurch gekennzeichnet**,
daß die Dosierpumpe (22), insbesondere dessen Kappenelement (34), sich zum Behälter (14) hin erstreckende Rast-, Schnapp- oder dergleichen -nasen (56) aufweist, die rast-, schnapp- oder dergleichen -artig mit einem sich vom Behälter (14) wegerstreckenden Ringwulst (58), einem umlaufenden Vorsprung oder dergleichen zur Fixierung der Dosierpumpe (22) an dem Behälter (14) in Funktionseingriff bringbar sind.

13. Vorrichtung nach einem der Ansprüche 6 bis 12,
**dadurch gekennzeichnet**,
daß die flexible Membran (40), insbesondere über eine Rast-, Schnapp- oder dergleichen -einrichtung (62) mit der am Kappenelement (34) integral angelenkten Betätigungstaste (36) verbunden ist.

14. Vorrichtung nach Anspruch 13,
**dadurch gekennzeichnet**,
daß die flexible Membran (40) mit einem sich etwa senkrecht wegerstreckenden Zapfen (64) oder dergleichen versehen ist, dessen freies Ende (68) in eine Rast-, Schnapp- oder dergleichen -aufnahme (66) an der Betätigungstaste (36) festlegbar ist,

15. Vorrichtung nach einem der Ansprüche 6 bis 14,
**dadurch gekennzeichnet**,
daß die flexible Membran (40) aus einem elastisch verformbaren Kunststoff, insbesondere Gummi oder dergleichen, besteht.

16. Vorrichtung nach einem der Ansprüche 1 bis 15,
**dadurch gekennzeichnet**,
daß das Verschlußelement (38) aus einem relativ starren Material, insbesondere Kunststoff, besteht.

17. Vorrichtung nach einem der Ansprüche 1 bis 16,
**dadurch gekennzeichnet**,
daß die am Kappenelement (34) angelenkte Betätigungstaste (36) über einen der Anlenkung etwa diametral gegenüberliegenden Sollbruchsteg (96) oder dergleichen Sollbruchverbindung mit dem Kappenelement (34) verbunden ist, oder bei erstmaligem Herunterdrücken der Betätigungstaste (36) vom Kappenelement (34) und/oder der Betätigungstaste (36) abreißbar ist.

18. Vorrichtung nach einem der Ansprüche 1 bis 17,
**dadurch gekennzeichnet**,
daß der flexible Beutel (98) zumindest mit einem Teil seiner äußeren Oberfläche (108) an der inneren Oberfläche (106) des Behälters (14) derart, fixiert ist, daß er sich bei seiner Entleerung von der inneren Oberfläche (106) des Behälters (14) wieder von selbst löst.

19. Vorrichtung nach Anspruch 18,
**dadurch gekennzeichnet**,
daß die Fixierung des flexiblen Beutels (98) an der inneren Oberfläche (106) des Behälters (14) durch Klebung erfolgt.

20. Vorrichtung nach Anspruch 18 oder 19,
**dadurch gekennzeichnet,**
daß die Fixierung des flexiblen Beutels (98) im Bodeneckbereich des Behälters (14) erfolgt.

21. Vorrichtung nach einem der Ansprüche 18 bis 20,
**dadurch gekennzeichnet**,
daß zumindest ein Teil des Bodens des flexiblen Beutels (98) mit der Umgebung kommuniziert.

22. Vorrichtung nach einem der Ansprüche 18 bis 21,
**dadurch gekennzeichnet**,
daß der Behälter (14) einen Lufteinlaßkanal (110) zur Bodenfläche des flexiblen Beutels (98) hin umfaßt, der in eine an der Außenseite (116) des Behälters (14) frei zugängliche Lufteinlaßöffnungen (118) mündet

23. Vorrichtung nach Anspruch 22,
**dadurch gekennzeichnet**,
daß sich der Lufteinlaßkanal (110) durch die Wandung des Behälters (14) im Bereich des Bodens (120) des Behälters (14), insbesondere etwa mittig zur Längsachse (122) des Behälters (14), hindurcherstreckt.

24. Vorrichtung nach einem der Ansprüche 18 bis 23,
**dadurch gekennzeichnet**,
daß der flexible Beutel (98) wasser- und/oder gasdurchlässig ist.

25. Vorrichtung nach einem der Ansprüche 18 bis 24,
**dadurch gekennzeichnet**,
daß der flexible Beutel (98) aus Kunststoff oder dergleichen Material gebildet ist.

26. Vorrichtung nach einem der Ansprüche 18 bis 25,
**dadurch gekennzeichnet**,
daß der flexible Beutel (98) aus wenigstens einer folienartigen Schicht gebildet ist.

27. Vorrichtung nach Anspruch 26,
**dadurch gekennzeichnet**,
daß der flexible Beutel (98) aus drei folienartigen Schichten gebildet ist, wobei vorzugsweise die Innenschicht aus einer PET (Polyethylenterephthalat)-Verbindung, die Zwischenschicht aus EVOH (Ethylvinylalkohol) und die Außenschicht aus Polyethylen oder dergleichen besteht.

## Claims

1. Device for the metered discharge of a fluid medium (12), especially a pasty mass such as cream, gel or the like, which has the following features:
- a container (14) with a container opening (16),
- a flexible bag (98), which is connected to the container (14) in the interior of the container (14), in the region of the container opening (16), and is provided for the purpose of holding the fluid medium (12), and
- a manually actuable metering pump (22) which can be connected to the container opening (16), the metering pump (22) having a pump body (26) which can be secured on the rim (24) of the container opening (16) and has a pump chamber (28), the volume of which can be altered from outside and which communicates with the interior of the container (14) on the inlet side via a nonreturn valve (30) that can be opened in the direction of the pump chamber (28), and communicates with the surroundings on the outlet side via a discharge opening (32),
characterized in that the metering pump (22) has a cap element (34) with an integrally hinged actuating button (36) and a cover-like closure element (38) which is assigned to the container opening (16) and includes the nonreturn valve (30), the closure element (38) having a cylindrical projection (70) which extends outwards through the cap element (34) and is surrounded by a cylindrical sleeve (76) which likewise extends outwards through the cap element (34) and at the free, outer end of which the discharge opening (32) is formed.

2. Device according to Claim 1, characterized in that the cylindrical projection (70) of the closure element (38) has, at the outer circumference, a longitudinal passage (42') which establishes the connection between the discharge opening (32) and a discharge passage (42) that opens into the pump chamber (28) and connects the pump chamber (28) to the discharge opening (32).

3. Device according to Claim 1 or 2, characterized in that the cylindrical projection (70) of the closure element (38) has at its outer, front end a bevel (82), recess or the like in the form of a circular ring which, together with a closing flap (90), which is formed as a ring at the free end of the cylindrical sleeve (76) and delimits the discharge opening (32), defines an annular material outlet (92).

4. Device according to Claim 3, characterized in that a circular front-end region (86) of the projection (70) of the closure element (38) and the annular closing flap (90) complement one another in such a way that, in the closed position, their outer surfaces lie approximately in one plane, this plane preferably having a slight concave curvature.

5. Device according to Claim 3 and/or 4, characterized in that the closing flap (90) is prestressed in the closing direction.

6. Device according to one of Claims 1 to 5, characterized in that the metering pump (22) furthermore has a flexible diaphragm (40) which is arranged between the cap element (34) and the closure element (38) and can be moved relative to the closure element (38) by means of the actuating button (36), the flexible diaphragm (40) and the closure element (38) defining between them the discharge passage (42) and the pump chamber (28) of the pump body.

7. Device according to one of Claims 1 to 6, characterized in that the cylindrical sleeve (76) which surrounds the cylindrical projection (70) is formed on the flexible diaphragm (40).

8. Device according to Claim 6, characterized in that the flexible diaphragm (40) and the closure element (38) can be fixed on the cap element (34) to form a single subassembly.

9. Device according to one of Claims 6 to 8, characterized in that the cover-like closure element (38) can, along its circumferential edge, be releasably connected, in particular latched, to the flexible diaphragm (40).

10. Device according to one of Claims 6 to 9, characterized in that the flexible diaphragm (40) can be fixed along its circumferential edge to the cap element (34) by means of a latching, snap-in or similar means (48).

11. Device according to one of Claims 1 to 10, characterized in that the metering pump (22) can be fixed to the container (14), in particular in the region of the container opening (16), by a latching, snap-in or similar means (54) or, alternatively, screwed onto the rim of the container opening (16).

12. Device according to Claim 11, characterized in that the metering pump (22), in particular the cap element (34) of the latter, has latching, snap-in or similar lugs (56) which extend towards the container (14) and can be brought into functional engagement, with a latching, snap-in or similar action, with an annular bead (58) which extends away from the container (14), with an encircling projection or the like to fix the metering pump (22) on the container (14).

13. Device according to one of Claims 6 to 12, characterized in that the flexible diaphragm (40) is connected, in particular by a latching, snap-in or similar means (62), to the actuating button (36) integrally hinged to the cap element (34).

14. Device according to Claim 13, characterized in that the flexible diaphragm (40) is provided with an approximately perpendicularly projecting stud (64) or the like, the free end (68) of which can be fixed in a latching, snap-in or similar socket (66) on the actuating button (36).

15. Device according to one of Claims 6 to 14, characterized in that the flexible diaphragm (40) is composed of an elastically deformable plastic, in particular rubber or the like.

16. Device according to one of Claims 1 to 15, characterized in that the closure element (38) is composed of a relatively rigid material, especially plastic.

17. Device according to one of Claims 1 to 16, characterized in that the actuating button (36) hinged to the cap element (34) is connected to the cap element (34) by way of a rupture web (96) or similar rupture joint situated approximately diametrically opposite the hinge, or can be torn away from the cap element (34) and/or the actuating button (36) when the actuating button (36) is first pushed down.

18. Device according to one of Claims 1 to 17, characterized in that the flexible bag (98) is fixed to the inner surface (106) of the container (14) in such a way, at least by part of its outer surface (108), that, when it is emptied, it comes away again from the inner surface (106) of the container (14) of its own accord.

19. Device according to Claim 18, characterized in that the flexible bag (98) is fixed to the inner surface (106) of the container (14) by adhesive bonding.

20. Device according to Claim 18 or 19, characterized in that the flexible bag (98) is fixed in the bottom-corner region of the container (14).

21. Device according to one of Claims 18 to 20, characterized in that at least part of the bottom of the flexible bag (98) communicates with the surroundings.

22. Device according to one of Claims 18 to 21, characterized in that the container (14) has an air inlet passage (110) leading to the bottom surface of the flexible bag (98) and opening into a freely accessible air inlet opening (118) at the outside (116) of the container (14).

23. Device according to Claim 22, characterized in that the air inlet passage (110) extends through the wall of the container (14) in the region of the bottom (120) of the container (14), in particular approximately centrally relative to the longitudinal axis (122) of the container (14).

24. Device according to one of Claims 18 to 23, characterized in that the flexible bag (98) is impermeable to water and/or gas.

25. Device according to one of Claims 18 to 24, characterized in that the flexible bag (98) is formed from plastic or a similar material.

26. Device according to one of Claims 18 to 25, characterized in that the flexible bag (98) is formed from at least one sheet-like layer.

27. Device according to Claim 26, characterized in that the flexible bag (98) is formed from three sheet-like layers, the inner layer preferably being composed of a PET (polyethyleneterephthalate) compound, the intermediate layer being composed of EVOH (ethylvinylalcohol) and the outer layer being composed of polyethylene or the like.

## Revendications

1. Dispositif pour la distribution dosée d'un produit apte à couler (12), en particulier une masse pâteuse telle qu'une crème, un gel ou similaire comprenant les éléments suivants :
- une cuve (14) avec une ouverture de cuve (16)
- une poche flexible (98) interne à la cuve (14), fixée à celle-ci dans la zone de son ouverture (16) et prévue pour recevoir le produit apte à couler (12) et
- une pompe de dosage (22) actionnée manuellement, qui peut être rapportée dans l'ouverture de la cuve (16), cette pompe de dosage (22) comprenant un corps de pompe (26) pouvant être fixé à la périphérie (24) de l'ouverture de cuve (16), corps avec une chambre de pompage (28) dont le volume peut être modifié de l'extérieur, cette chambre communiquant du côté de son entrée avec l'intérieur de la cuve (14) au travers d'un clapet anti-retour (30) s'ouvrant en direction de la chambre de pompage (28) et communiquant, du côté de sa sortie avec l'extérieur au travers d'une ouverture de distribution (32) caractérisé en ce que cette pompe de dosage (22) présente un élément de calotte (34) dans lequel est intégré un bouton d'actionnement articulé (36) ainsi qu'un élément de fermeture de type couvercle agencé dans l'ouverture de la cuve (16) et entourant le clapet anti-retour (30), lequel élément de fermeture (38) présente une protubérance (70) de forme cylindrique traversant l'élément de calotte (34) jusque vers l'extérieur, cette protubérance étant entourée par une douille de forme cylindrique traversant également l'élément de calotte vers l'extérieur, douille (76) à l'extrémité libre externe de laquelle est formée l'ouverture de distribution (32).

2. Dispositif selon la revendication 1, caractérisé en ce que la protubérance de forme cylindrique (70) de l'élément de fermeture (38) comprend en sa périphérie externe un canal longitudinal (42') établissant la liaison entre l'ouverture de distribution (32) et un canal de distribution (42) débouchant dans la chambre de pompage (28), ce qui relie la chambre de pompage (28) avec l'ouverture de distribution (32).

3. Dispositif selon l'une des revendications 1 ou 2, caractérisé en ce que la protubérance de forme cylindrique (70) de l'élément de fermeture (38) présente en son extrémité frontale externe un biseautage (82), un évidemment ou similaire en forme de couronne circulaire qui défini une sortie annulaire (92) de matériau en combinaison avec des lèvres de fermeture (90) annulaire formée à l'extrémité libre de la douille en forme cylindrique (76), ces lèvres délimitant l'ouverture de distribution (32).

4. Dispositif selon la revendication 3, caractérisé en ce qu'une zone circulaire frontale (86) de la protubérance (70) de l'élément de fermeture (38) se complète avec les lèvres de fermeture annulaire (90) de telle sorte que leur surface externe se situe sensiblement dans un plan lorsqu'en position de fermeture, ce plan étant avantageusement légèrement concave.

5. Dispositif selon la revendication 3 et/ou 4, caractérisé en ce que les lèvres de fermeture (90) sont précontraintes en direction de la fermeture.

6. Dispositif selon l'une des revendications 1 à 5, caractérisé en ce que la pompe de dosage (22) comprend de plus une membrane flexible (40) agencée entre l'élément de calotte (34) et l'élément de fermeture (38) et susceptible d'être déplacée par rapport à l'élément de fermeture au moyen du bouton d'actionnement (36), cette membrane flexible (40) et cet élément de fermeture (38) définissant entre eux la chambre de pompage (28) du corps de pompe et le canal de sortie (42).

7. Dispositif selon l'une des revendications 1 à 6, caractérisé en ce que la douille (76) de forme cylindrique entourant la protubérance de forme cylindrique (70) est réalisée sur la membrane flexible (40).

8. Dispositif selon la revendication 6, caractérisé en ce que la membrane flexible (40) et l'élément de fermeture (38) peuvent être fixés à l'élément de calotte (34) en tant que réalisation d'une unité de montage commune.

9. Dispositif selon l'une des revendications 6 à 8, caractérisé en ce que l'élément de fermeture de type à couvercle (38) peut être relié le long de sa périphérie de manière démontable avec la membrane flexible (40), en particulier par encliquetage.

10. Dispositif selon l'une des revendications 6 à 9, caractérisé en ce que la membrane flexible (40) peut être fixée le long de sa périphérie à l'élément de calotte (34) par un dispositif (48) à encliquetage, à serrage élastique ou similaire.

11. Dispositif selon l'une des revendications 1 à 10, caractérisé en ce que la pompe doseuse (22) peut être fixée à la cuve (14), plus particulièrement dans la zone de l'ouverture de la cuve (16), par un dispositif (54) à encliquetage, à serrage élastique ou similaire ; ou, en alternative, peut être vissé sur le bord de l'ouverture de la cuve (16).

12. Dispositif selon la revendication 11, caractérisé en ce que la pompe de dosage (22), en particulier l'élément en calotte (34), présente un nez (56) d'encliquetage, de serrage ou similaire en direction de la cuve (14), nez qui peut être amené en contact fonctionne pour fixer la pompe de dosage (22) à la cuve (14) par encliquetage, serrage élastique ou similaire avec un bourrelet annulaire (58), une protubérance périphérique ou similaire de la cuve (14) s'étendant vers l'extérieur.

13. Dispositif selon l'une des revendications 6 à 12, caractérisé en ce que la membrane flexible (40) est reliée au bouton d'actionnement (36) articulé dans l'élément en calotte (34) plus particulièrement par un dispositif (62) à encliquetage, serrage élastique ou similaire.

14. Dispositif selon la revendication 13, caractérisé en ce que la membrane flexible (40) est prévue avec un doigt (64) ou similaire protubérant sensiblement perpendiculairement, et dont l'extrémité libre (68) peut être engagée dans un orifice (66) d'encliquetage, de serrage élastique ou similaire du bouton de manoeuvre (36).

15. Dispositif selon l'une des revendications 6 à 14, caractérisé en ce que la membrane flexible (40) est réalisée en un matériau synthétique déformable élastiquement, en particulier une gomme ou similaire.

16. Dispositif selon l'une des revendications 1 à 15, caractérisé en ce que l'élément de fermeture (38) est réalisé en un matériau relativement rigide, en particulier un plastique.

17. Dispositif selon l'une des revendications 1 à 16, caractérisé en ce que le bouton d'actionnement (36) articulé à l'élément de calotte (34) est relié à cet élément de calotte (34) sensiblement à l'opposé diamétral de l'articulation par un pont de rupture (96) ou une liaison faible similaire prévu pour être rompu soit de l'élément de calotte (34), soit du bouton d'actionnement (36) lors du premier appui vers le bas exercé sur ce bouton d'actionnement (36).

18. Dispositif selon l'une des revendications 1 à 17, caractérisé en ce que l'enveloppe souple (98) est fixée par au moins une partie de sa surface externe (108) à la surface interne (106) de la cuve (14) de telle sorte qu'elle se détache à nouveau d'elle-même de la surface interne (106) de la cuve (14) lors de son vidage.

19. Dispositif selon la revendication 13, caractérisé en ce que la fixation de la poche flexible (98) à la face interne (106) de la cuve (14) s'effectue par collage.

20. Dispositif selon l'une des revendications 18 ou 19, caractérisé en ce que la fixation de la poche flexible (98) dans la zone de coin de plancher de la cuve (14) s'effectue par collage.

21. Dispositif selon l'une des revendications 18 à 20, caractérisé en ce qu'au moins une partie du fond de la poche flexible (98) communique avec l'extérieur.

22. Dispositif selon l'une des revendications 18 à 21, caractérisé en ce que la cuve (14) comprend un canal d'amenée de l'air (110) en direction de la surface de fond de la poche flexible (98), ce canal débouchant du côté externe (116) de la cuve (14) par une ouverture d'entrée (118) libre et facile d'accès de l'air.

23. Dispositif selon la revendication 22, caractérisé en ce que en ce que le canal d'amenée de l'air (110) traverse la paroi de la cuve (14) dans la zone du fond (120) de la cuve (14), en particulier sensiblement au milieu de l'axe longitudinal (122) de la cuve (14).

24. Dispositif selon l'une des revendications 18 à 23, caractérisé en ce que la poche flexible (98) est perméable au gaz et/ou à l'eau.

25. Dispositif selon l'une des revendications 18 à 24, caractérisé en ce que la poche flexible (98) est réalisée en plastique ou matériau analogue.

26. Dispositif selon l'une des revendications 18 à 25, caractérisé en ce que la poche flexible (98) est réalisée en au moins une couche sous la forme d'une feuille.

27. Dispositif selon la revendication 26, caractérisé en ce que la poche flexible (98) est formée de trois couches sous la forme de feuilles parmi lesquelles, avantageusement la couche interne est un PET (Polyéthylène téréphtalate), la couche intermédiaire est un EVOH (Ethyle vinyle alcool) et la couche externe est un Polyéthylène ou similaire.
